# EUROPEAN PATENT SPECIFICATION

(11) **EP 3 940 355 B1**
(45) Date of publication and mention of the grant of the patent: **08.03.2023**
(21) Application number: 20795470.2
(22) Date of filing: 21.04.2020
(51) Int. Cl.: G01J 1/02, G01J 1/04, G01D 11/30, F24F 11/89, G01J 5/00, G01J 5/04

(54) **DRIVE DEVICE**
ANTRIEBSVORRICHTUNG
DISPOSITIF D'ENTRAÎNEMENT

(30) Priority: 25.04.2019 JP 2019084061
(43) Date of publication of application: 19.01.2022
(73) Proprietor: Mitsubishi Heavy Industries Thermal Systems, Ltd., Tokyo, 100-8332 (JP)
(72) Inventor: UNO Naomichi, Tokyo 100-8332 (JP); NUNOME, Yoshinori, Tokyo 100-8332 (JP); MORI, Hironori, Tokyo 100-8332 (JP)
(74) Representative: Cabinet Beau de Loménie
(86) International application number: PCT/JP2020/017205
(87) International publication number: WO 2020/218299

(56) References cited:
- JP-A- H01 277 796
- JP-A- H04 344 492
- JP-A- 2005 017 150
- JP-A- 2005 061 661
- JP-A- 2008 122 029
- JP-A- 2010 065 997
- JP-A- 2016 148 648
- US-A1- 2006 038 680

## Description

### Technical Field

The present invention relates to a drive device for driving a base portion provided with a detection unit that detects information or a transmission unit that transmits information.

### Background Art

In recent years, devices such as wall-mounted type room air conditioners equipped with various sensors such as a human sensor, a temperature sensor, and an illuminance sensor have been known. In such a device, comfort is improved by detecting the behavior of a person, a change in indoor temperature, a sunshine condition from the outside, or the like, and by performing control according to the detection result. Further, a method of expanding the detection range of such a sensor by mounting a drive unit such as a motor to the sensor, or the like has also been generalized (refer to, for example, PTL 1). PTL 1 discloses a sensor drive mechanism that rotates a sensor disposed toward a target space in a right-left direction and an up-down direction to rotate the sensor into the target space along a rectangular locus.

### Citation List

### Patent Literature

[PTL 1] Japanese Unexamined Patent Application Publication No. 2013-40709
[PTL 2] JP2010065997
[PTL 3] JP2005017150
[PTL 4] JP2008122029
[PTL 5] JP2005061661
[PTL 6] JP2016148648
[PTL 7] US2006038680

### Summary of Invention

### Technical Problem

However, the sensor drive mechanism of PTL 1 switches the rotation of a sensor holder by the rotational force of a driving shaft from the right-left direction to the up-down direction, by operating a friction clutch when the rotation of the sensor holder is restricted at a predetermined position in a right direction or a predetermined position in a left direction. Therefore, the sensor drive mechanism of PTL 1 becomes a complicated mechanism using a large number of components such as a plurality of gears for transmitting the rotational force of the friction clutch or the driving shaft.

The present invention has been made in view of such circumstances and has an object to provide a drive device in which it is possible to detect information that is obtained from a wide detection range or transmit information to a wide transmission range with a relatively simple mechanism.

### Solution to Problem

In order to solve the above problem, a drive device according to the present invention adopts the following means.

According to an aspect of the present invention, there is provided a drive device including the features of claim 1.

According to the drive device according to the invention, the holding unit mounted to the driving shaft rotates around the axis with the rotation of the driving shaft around the axis. The inclined plane formed by the holding unit is inclined by a predetermined angle with respect to a plane orthogonal to the axis along which the driving shaft is disposed, and the base portion is held along the inclined plane. Therefore, the detection range of the detection unit or the transmission range of the transmission unit can be expanded by an amount corresponding to the inclination angle, as compared with a case where the base portion is disposed along the plane orthogonal to the axis. That is, it is possible to provide a drive device in which it is possible to detect information that is obtained from a wide detection range or transmit information to a wide transmission range with a relatively simple mechanism.

According to the drive device having this configuration, the rotating member of the holding unit mounted to the driving shaft rotates around the axis with the rotation of the driving shaft around the axis. The rotating member rotates around the axis in a state where the inclined plane on the tip side thereof is in contact with the bottom portion of the second frame body. Therefore, the base portion mounted to the bottom portion of the second frame body rotates around the axis while maintaining a predetermined angle along the inclined plane formed by the rotating member. Further, when the base portion rotates around the axis, the first frame body swings around the first swing axis and the second frame body swings around the second swing axis orthogonal to the first swing axis. Since the inclination angle of the base portion is a combination of a swing angle around the first swing axis and a swing angle around the second swing axis, it is possible to expand the detection range of the detection unit or the transmission range of the transmission unit, as compared with a case where a swing mechanism using the two swing axes is not used.

Further, according to the drive device having this configuration, while the rotating member rotates around the axis, the base portion does not rotate around the axis even if the rotating member rotates. This is because a rotation motion by the rotating member is converted into a swing motion around the first swing axis and the second swing axis. Therefore, in a case where a signal line or a power supply line is connected to the detection unit or the transmission unit, the signal line or the power supply line does not rotate with the rotation of the rotating member. Therefore, even if the rotating member is rotated around the axis, the up-down direction of the base portion is not reversed, and thus the signal line or the power supply line is appropriately prevented from being twisted or broken.

In the drive device according to the aspect of the present invention, a configuration may be made in which the holding unit includes a holding member that holds the base portion through the inclined plane, and a support member that is mounted to the driving shaft and supports the back surface side of the inclined plane, and the holding member is formed integrally with the support member.

According to the drive device having this configuration, it is possible to detect information that is obtained from a wide detection range or transmit information to a wide transmission range, by using a relatively simple component in which the holding member for holding the base portion and the support member that is mounted to the driving shaft are integrally formed.

In the drive device according to the aspect of the present invention, a plurality of the detection units may be provided at the base portion.

The plurality of detection units are provided at a single base portion, whereby the relative positional relationship of each detection unit is fixed, and therefore, the detection accuracy in a case where the detection results of the plurality of detection units are associated with each other is improved.

In the drive device according to the aspect of the present invention, the detection unit may be at least one of a human sensor that detects a moving body in the predetermined detection range, a temperature sensor that detects a temperature in the predetermined detection range, an illuminance sensor that detects an illuminance in the predetermined detection range, a receiving unit that receives information that is transmitted from the predetermined detection range, an image sensor that acquires an image in the predetermined detection range, and a sensor that detects leakage of a refrigerant in the predetermined detection range.

### Advantageous Effects of Invention

According to the present invention, it is possible to provide a drive device in which it is possible to detect information that is obtained from a wide detection range or transmit information to a wide transmission range with a relatively simple mechanism.

### Brief Description of Drawings

Fig. 1 is a front view showing an indoor unit of an air conditioner according to a first embodiment of the present invention.
Fig. 2 is a perspective view of a sensor drive device according to the first embodiment of the present invention.
Fig. 3 is an exploded perspective view of the sensor drive device shown in Fig. 2.
Fig. 4 is a vertical sectional view showing a state where a rotating member shown in Fig. 3 is mounted to a drive unit.
Fig. 5 is a vertical sectional view of the sensor drive device shown in Fig. 2.
Fig. 6 is a vertical sectional view of the sensor drive device in which a sensor substrate is rotated 90 degrees in a clockwise direction.
Fig. 7 is a vertical sectional view of the sensor drive device in which the sensor substrate is rotated 180 degrees in a clockwise direction.
Fig. 8 is a vertical sectional view of the sensor drive device in which the sensor substrate is rotated 270 degrees in a clockwise direction.
Fig. 9 is a perspective view of a sensor drive device according to a second embodiment of the present invention.
Fig. 10 is an exploded perspective view of the sensor drive device shown in Fig. 9.
Fig. 11 is a right side view of the sensor drive device shown in Fig. 9.
Fig. 12 is a vertical sectional view of the sensor drive device shown in Fig. 9.
Fig. 13 is a vertical sectional view of the sensor drive device in which the sensor substrate is rotated 90 degrees in a clockwise direction.
Fig. 14 is a vertical sectional view of the sensor drive device in which the sensor substrate is rotated 180 degrees in a clockwise direction.
Fig. 15 is a vertical sectional view of the sensor drive device in which the sensor substrate is rotated 270 degrees in a clockwise direction.

### Description of Embodiments

### [First Embodiment]

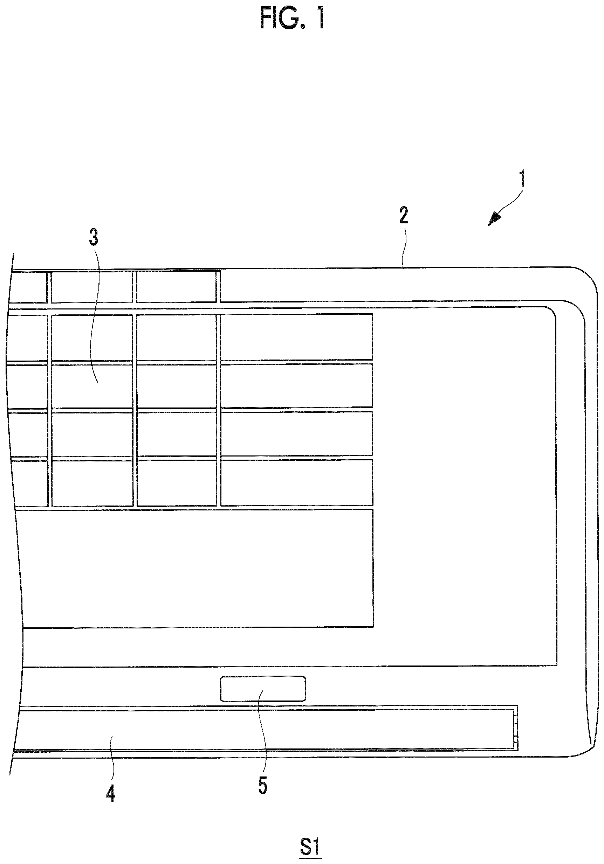

Hereinafter, an indoor unit 1 of an air conditioner according to a first embodiment of the present invention will be described with reference to the drawings. Fig. 1 is a front view showing the indoor unit 1 of the air conditioner. The indoor unit 1 of the air conditioner has a main body case 2, and a heat exchanger having a refrigerant pipe through which a refrigerant flows, a blower, a motor for driving the blower, a drain pan, and the like are provided inside the main body case 2.

As shown in Fig. 1, a suction port 3, a blowout port 4, and a sensor cover 5 for covering a sensor drive device 100 (described later) are provided on the front surface of the main body case 2. The indoor air in an indoor space S1 is led from the suction port 3 to the inside of the main body case 2 and is led to the heat exchanger by the blower. Then, the indoor air that has passed through the heat exchanger to be cooled or heated is blown out from the blowout port 4 to the indoor space S1.

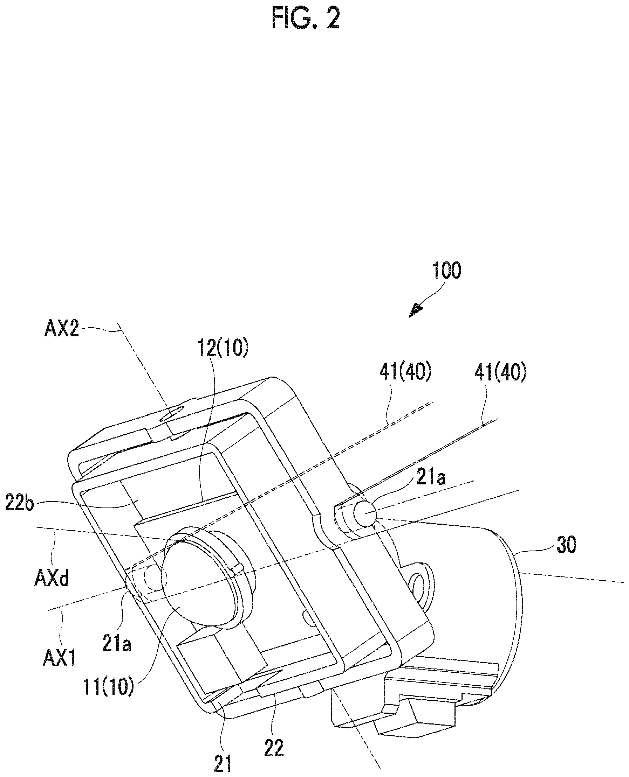

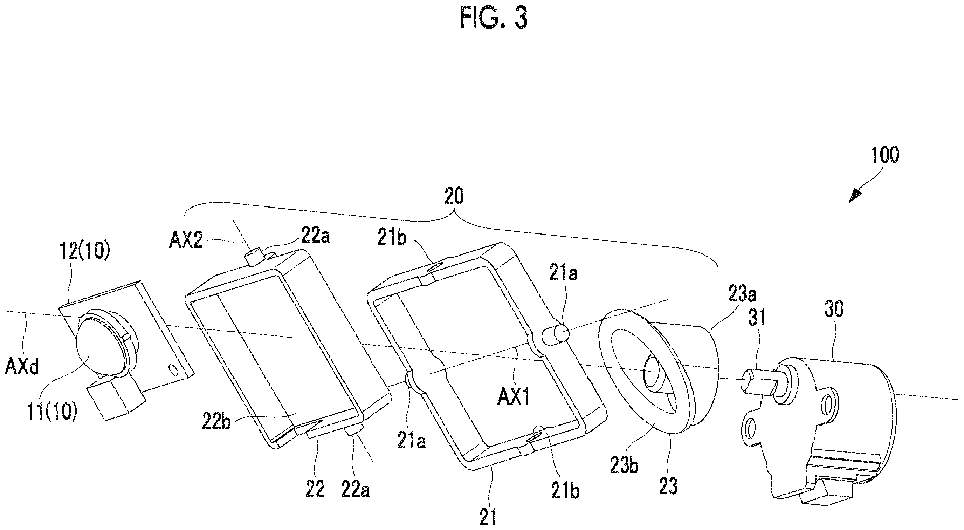

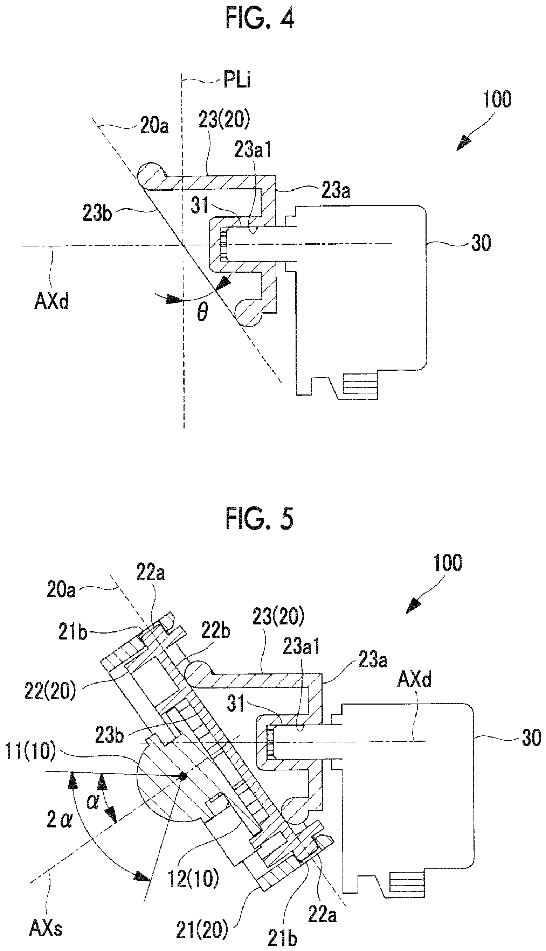

Next, the sensor drive device 100 of the present embodiment will be described with reference to the drawings. Fig. 2 is a perspective view of the sensor drive device 100 according to the present embodiment. Fig. 3 is an exploded perspective view of the sensor drive device 100 shown in Fig. 2. Fig. 4 is a vertical sectional view showing a state where a rotating member 23 shown in Fig. 3 is mounted to a driving shaft 31. Fig. 5 is a vertical sectional view of the sensor drive device 100 shown in Fig. 2.

The sensor drive device 100 of the present embodiment is a device in which a detection range capable of being detected by the sensor 11 itself is expanded with a simple mechanism by rotating a sensor substrate (a base portion) 10 provided with a sensor (a detection unit) 11 around a drive axis AXd. Here, the sensor 11 provided on the sensor substrate 10 is, for example, a human sensor. The human sensor detects infrared rays that are emitted from a moving body having a temperature higher than room temperature, such as a person, in the indoor space S1 in which the indoor unit 1 is installed, thereby detecting the moving body existing in the indoor space S1.

As shown in Figs. 2 to 5, the sensor drive device 100 includes the sensor substrate 10, a holding unit 20 that holds the sensor substrate 10, a drive unit 30 that rotates the holding unit 20 around the axis AXd, and a base 40 to which the holding unit 20 and the drive unit 30 are mounted. In the sensor drive device 100, the holding unit 20 and the drive unit 30 are mounted to the base 40, and the sensor substrate 10 is held by the holding unit 20 to be integrated as one unit. The sensor drive device 100 is mounted to the inside of the main body case 2 on the back surface side of the sensor cover 5 through the base 40, and detects infrared rays that are emitted from the indoor space S1 through the sensor cover 5.

The sensor substrate 10 is a substrate provided with the sensor 11 that detects the infrared rays that are emitted from the indoor space S1 in which the indoor unit 1 is installed. The sensor substrate 10 has the sensor 11 and a plate-shaped substrate main body 12 to which the sensor 11 is mounted. As shown in Fig. 5, the sensor 11 is a sensor whose detection range is a range of a directivity angle 2α that is inclined at an angle α with respect to a sensor axis AXs orthogonal to a plane on which the substrate main body 12 is disposed. A signal line (not shown) and a power supply line (not shown) that are electrically connected to a control substrate (not shown) which is accommodated in the main body case 2 and controls the indoor unit 1 are mounted on the sensor substrate 10.

The holding unit 20 is for holding the substrate main body 12 of the sensor substrate 10, and includes a first frame body 21, a second frame body 22, and the rotating member 23.

As shown in Figs. 2 and 3, the first frame body 21 is a frame-shaped member in which four members each extending in a plate shape are integrally formed so as to have a rectangular shape when viewed in a plan view. A pair of protrusion portions 21a is provided at the first frame body 21 so as to protrude outward from both end portions in the horizontal direction. As shown in Fig. 2, the base 40 is provided with a pair of arm portions 41. A through-hole for accommodating the protrusion portion 21a is provided at the tip of each of the pair of arm portions 41. The first frame body 21 is mounted to the base 40 so as to be swingable around a first swing axis AX1 by inserting the pair of protrusion portions 21a into the through-holes of the pair of arm portions 41.

The second frame body 22 is a frame-shaped member in which four members each extending in a plate shape are integrally formed so as to have a rectangular shape when viewed in a plan view. As shown in Fig. 3, a pair of protrusion portions 22a is provided at the second frame body 22 so as to protrude outward from both end portions in the horizontal direction. A pair of through-holes 21b for accommodating the pair of protrusion portions 22a is provided in the first frame body 21. The second frame body 22 is mounted to the first frame body 21 so as to be swingable around a second swing axis AX2 orthogonal to the first swing axis AX1 by inserting the pair of protrusion portions 22a into the pair of through-holes 21b.

As shown in Fig. 3, the second frame body 22 has a planar bottom portion 22b to which the substrate main body 12 of the sensor substrate 10 is mounted. The bottom portion 22b rotates around the drive axis AXd while being in contact with a tip portion 23b of the rotating member 23 (described later). Since the tip portion 23b of the rotating member 23 forms an inclined plane 20a, the second frame body 22 rotates the sensor substrate 10 around the drive axis AXd while holding the sensor substrate 10 along the inclined plane 20a.

The rotating member 23 is a member having a base end portion 23a that is mounted to the driving shaft 31 of the drive unit 30, and the tip portion 23b that forms the inclined plane 20a (refer to Fig. 4). As shown in Fig. 4, the base end portion 23a has an insertion hole 23a1 for inserting the driving shaft 31. The rotating member 23 with the driving shaft 31 inserted into the insertion hole 23a1 rotates integrally with the driving shaft 31 around the drive axis AXd.

As shown in Fig. 3, the tip portion 23b of the rotating member 23 is formed in an annular shape along a circumferential direction around the drive axis Axd. As shown in Fig. 4, the tip portion 23b is formed such that the annular portion thereof is disposed on the same plane, and the inclined plane 20a is formed on the tip side of the rotating member 23. Although the inclined plane 20a is a virtual plane, the bottom portion 22b is disposed along the inclined plane 20a by bringing the planar bottom portion 22b of the second frame body 22 into contact with the tip portion 23b. The rotating member 23 rotates around the drive axis AXd in a state where the tip portion 23b forming the inclined plane 20a is in contact with the bottom portion 22b.

As shown in Fig. 4, the inclined plane 20a is inclined by a predetermined angle θ with respect to a plane PLi orthogonal to the drive axis AXd along which the driving shaft 31 is disposed. The predetermined angle θ is appropriately set in a range larger than 0 degrees and smaller than 90 degrees in consideration of the directivity angle 2α of the sensor 11 and a range to be detected by the sensor 11.

The drive unit 30 is, for example, a motor, and is a mechanism for rotating the driving shaft 31 disposed along the drive axis AXd around the drive axis AXd. The drive unit 30 rotates the driving shaft 31, thereby rotating the rotating member 23 mounted to the driving shaft 31 around the drive axis AXd.

The base 40 is provided with the pair of arm portions 41 shown in Fig. 2, and a main body portion (not shown) connected to the arm portions 41. The drive unit 30 is mounted to the main body portion. The base 40 is mounted to the inside of the main body case 2 on the back surface side of the sensor cover 5.

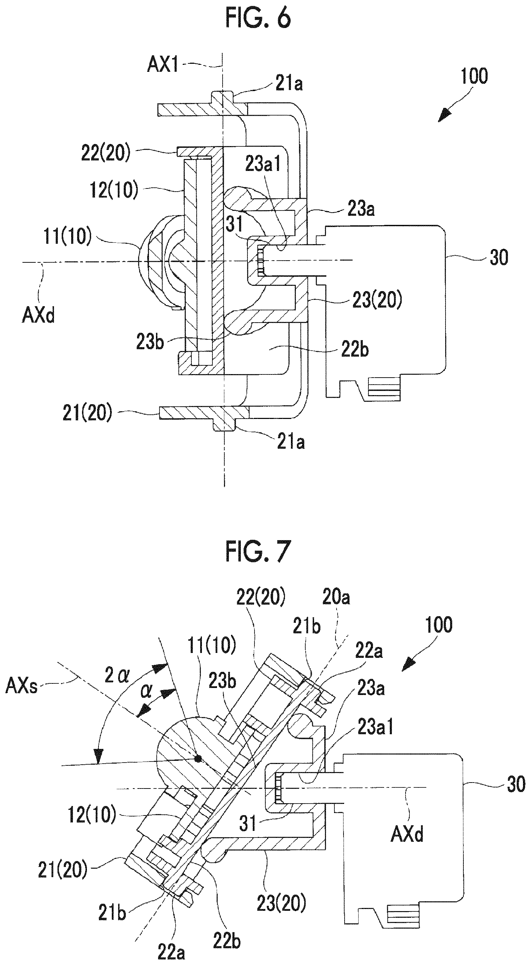

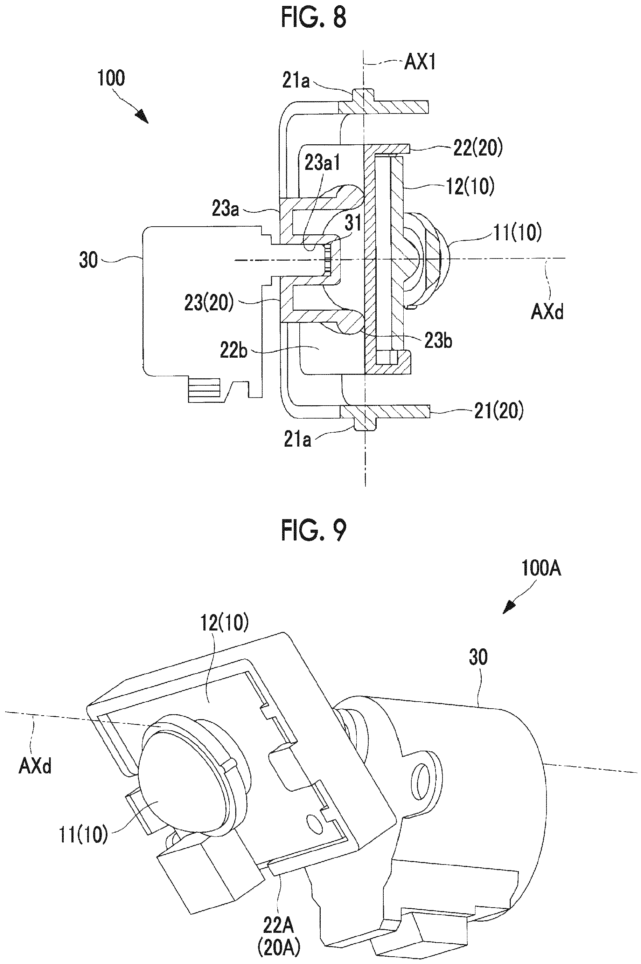

Next, an operation in which the sensor drive device 100 of the present embodiment rotates the sensor substrate 10 around the axis AXd will be described with reference to the drawings. Fig. 6 is a vertical sectional view of the sensor drive device 100 in which the sensor substrate 10 is rotated 90 degrees in the clockwise direction. Fig. 7 is a vertical sectional view of the sensor drive device 100 in which the sensor substrate 10 is rotated 180 degrees in the clockwise direction. Fig. 8 is a vertical sectional view of the sensor drive device 100 in which the sensor substrate 10 is rotated 270 degrees in the clockwise direction.

Fig. 5 described above is a vertical sectional view of the sensor drive device 100 shown in Fig. 2. The state shown in Figs. 2 and 5 is assumed to be a state where the rotation angle of the sensor substrate 10 around the driving shaft AXd is 0 degrees. As shown in Fig. 5, in the sensor drive device 100, in a case where the rotation angle of the sensor substrate 10 around the drive axis AXd is 0 degrees, the sensor axis AXs extends toward the lower side in the up-down direction and the center in the right-left direction of the indoor space S1. In the state shown in Fig. 5, the direction in which the first swing axis AX1 extends coincides with the horizontal direction.

As shown in Fig. 5, the holding unit 20 forms the inclined plane 20a in which the normal direction is directed to the lower end of the detection range in the up-down direction and the center of the detection range in the right-left direction of the indoor space S1 due to the rotating member 23, and supports the bottom portion 22b of the second frame body 22 along the inclined plane 20a. Therefore, a state is created where the normal direction to the inclined plane 20a and the sensor axis AXs coincide with each other and the sensor axis AXs extends toward the lower side in the up-down direction and the center in the right-left direction of the indoor space S1.

Fig. 6 shows the sensor drive device 100 in a state where the sensor substrate 10 is rotated 90 degrees in the clockwise direction. As shown in Fig. 6, in the sensor drive device 100, in a case where the rotation angle of the sensor substrate 10 around the drive axis AXd is 90 degrees, the sensor axis AXs extends toward the center in the up-down direction and the right side (the direction in a case where the indoor space S1 is viewed from the indoor unit 1) in the right-left direction of the indoor space S1. In the state shown in Fig. 6, the direction in which the second swing axis AX2 extends coincides with the horizontal direction.

In the state shown in Fig. 6, the holding unit 20 forms the inclined plane 20a in which the normal direction is directed to the center of the detection range in the up-down direction and the right end of the detection range in the right-left direction of the indoor space S1 due to the rotating member 23, and supports the bottom portion 22b of the second frame body 22 along the inclined plane 20a. Therefore, a state is created where the normal direction to the inclined plane 20a and the sensor axis AXs coincide with each other and the sensor axis AXs extends toward the center in the up-down direction and the right end in the right-left direction of the indoor space S1.

Fig. 7 shows the sensor drive device 100 in a state where the sensor substrate 10 is rotated 180 degrees in the clockwise direction. As shown in Fig. 7, in the sensor drive device 100, in a case where the rotation angle of the sensor substrate 10 around the drive axis AXd is 180 degrees, the sensor axis AXs extends toward the upper side in the up-down direction and the center in the right-left direction of the indoor space S1. In the state shown in Fig. 7, the direction in which the first swing axis AX1 extends coincides with the horizontal direction.

As shown in Fig. 7, the holding unit 20 forms the inclined plane 20a in which the normal direction is directed to the upper end of the detection range in the up-down direction and the center of the detection range in the right-left direction of the indoor space S1 due to the rotating member 23, and supports the bottom portion 22b of the second frame body 22 along the inclined plane 20a. Therefore, a state is created where the normal direction to the inclined plane 20a and the sensor axis AXs coincide with each other and the sensor axis AXs extends toward the upper side in the up-down direction and the center in the right-left direction of the indoor space S1.

Fig. 8 shows the sensor drive device 100 in a state where the sensor substrate 10 is rotated 270 degrees in the clockwise direction. As shown in Fig. 8, in the sensor drive device 100, in a case where the rotation angle of the sensor substrate 10 around the drive axis AXd is 270 degrees, the sensor axis AXs extends toward the center in the up-down direction and the left side (the direction in a case where the indoor space S1 is viewed from the indoor unit 1) in the right-left direction of the indoor space S1. In the state shown in Fig. 8, the direction in which the second swing axis AX2 extends coincides with the horizontal direction.

In the state shown in Fig. 8, the holding unit 20 forms the inclined plane 20a in which the normal direction is directed to the center of the detection range in the up-down direction and the left end of the detection range in the right-left direction of the indoor space S1 due to the rotating member 23, and supports the bottom portion 22b of the second frame body 22 along the inclined plane 20a. Therefore, a state is created where the normal direction to the inclined plane 20a and the sensor axis AXs coincide with each other and the sensor axis AXs extends toward the center in the up-down direction and the left end in the right-left direction of the indoor space S1. When the sensor substrate 10 is further rotated 90 degrees in the clockwise direction around the drive axis AXd from the state shown in Fig. 8, it returns to the state shown in Fig. 5.

As described above, in the sensor drive device 100, the driving shaft 31 is rotated once around the drive axis AXd by the drive unit 30, whereby the rotating member 23 rotates once around the drive axis AXd. The tip portion 23b of the rotating member 23 forms the inclined plane 20a and is in contact with the bottom portion 22b of the second frame body 22.

Therefore, the sensor substrate 10 held by the second frame body 22 rotates around the drive axis AXd while maintaining the inclination angle along the inclined plane 20a. Therefore, the holding unit 20 rotates the sensor substrate 10 once around the drive axis AXd while holding the sensor substrate 10 along the inclined plane 20a, by rotating the rotating member 23 once around the drive axis AXd.

A control substrate (not shown) that controls the indoor unit 1 controls, for example, the drive unit 30 so as to continuously rotate the driving shaft 31 in the same rotation direction. The sensor substrate 10 does not rotate around the drive axis AXd even if the rotating member 23 rotates. Therefore, the signal line and the power supply line mounted to the sensor 11 do not rotate around the drive axis Axd with the rotation of the rotating member 23. Therefore, in the sensor drive device 100 of the present embodiment, by executing a relatively simple control operation of continuously rotating the driving shaft 31 in the same rotation direction, it is possible to continuously detect information that is obtained from a wide detection range.

The tip portion 23b of the rotating member 23 and the bottom portion 22b of the second frame body 22 are not fixed to each other. The tip portion 23b of the rotating member 23 slides with the rotation of the driving shaft 31 while maintaining a state of being in contact with the bottom portion 22b of the second frame body 22. In this way, the sensor substrate 10 rotates around the drive axis AXd while maintaining the inclination angle along the inclined plane 20a.

The operation and effect of the sensor drive device 100 of the present embodiment described above will be described.

According to the sensor drive device 100 of the present embodiment, the rotating member 23 of the holding unit 20 mounted to the driving shaft 31 rotates around the drive axis AXd with the rotation of the driving shaft 31 around the drive axis AXd. The inclined plane 20a formed by the holding unit 20 is inclined by the predetermined angle θ with respect to the plane orthogonal to the drive axis AXd along which the driving shaft 31 is disposed, and the sensor substrate 10 is held along the inclined plane 20a.

Therefore, it is possible to further expand the directivity angle 2α, which is the detection range of the sensor 11, by an amount corresponding to the predetermined angle θ, as compared with a case where the sensor substrate 10 is disposed along the plane PLi orthogonal to the drive axis AXd. That is, it is possible to provide the sensor drive device 100 in which it is possible to detect information that is obtained from a wide detection range with a relatively simple mechanism.

Further, according to the sensor drive device 100 of the present embodiment, the rotating member 23 rotates around the drive axis AXd in a state where the inclined plane 20a on the tip side is in contact with the bottom portion 22b of the second frame body 22. Therefore, the sensor substrate 10 mounted to the bottom portion 22b of the second frame body rotates around the drive axis AXd while maintaining the predetermined angle θ along the inclined plane 20a formed by the rotating member 23. Further, when the sensor substrate 10 rotates around the drive axis AXd, the first frame body 21 swings around the first swing axis AX1 and the second frame body 22 swings around the second swing axis AX2 orthogonal to the first swing axis AX1. Since the inclination angle of the sensor substrate 10 is a combination of a swing angle around the first swing axis AX2 and a swing angle around the second swing axis AX2, the detection range of the sensor 11 can be expanded as compared with a case where the swing mechanism using the two swing axes is not used.

Further, according to the sensor drive device 100 of the present embodiment, while the rotating member 23 rotates around the drive axis AXd, the sensor substrate 10 does not rotate around the drive axis AXd even if the rotating member 23 rotates. This is because a rotation motion by the rotating member 23 is converted into a swing motion around the first swing axis AX1 and the second swing axis AX2. Therefore, in a case where the signal line or the power supply line is connected to the sensor 11, the signal line or the power supply line does not rotate with the rotation of the rotating member 23. Therefore, even if the rotating member 23 is rotated around the drive axis AXd, the up-down direction of the sensor 11 is not reversed, and thus the signal line or the power supply line is appropriately prevented from being twisted or broken.

### [Second Embodiment]

Next, a sensor drive device 100A according to a second embodiment of the present invention will be described with reference to the drawings. The present embodiment is a modification example of the first embodiment and is the same as the first embodiment except for a case particularly described below, and thus the description thereof will be omitted below. Similar to the sensor drive device 100 of the first embodiment, the sensor drive device 100A of the present embodiment drives, for example, a human sensor mounted to the indoor unit 1 of the air conditioner.

The sensor drive device 100 of the first embodiment is provided with the holding unit 20 having the sensor substrate 10, the first frame body 21, the second frame body 22, and the rotating member 23, and the rotating member 23 is rotated around the drive axis AXd while the tip portion 23b of the rotating member 23 is in contact with the bottom portion 22b of the second frame body 22. The sensor drive device 100 of the first embodiment is advantageous in that the detection range of the sensor 11 can be expanded over a wide range by using the swing mechanism using two swing axes.

In contrast, in the sensor drive device 100A of the present embodiment, a holding member 22A for holding the sensor substrate 10 and a support member 23A for supporting the holding member 22A are integrally formed, and the support member 23A and the holding member 22A are integrally rotated around the drive axis AXd. The sensor drive device 100A of the present embodiment is advantageous in that it has a simple configuration in which the swing mechanism using two swing axes is not used.

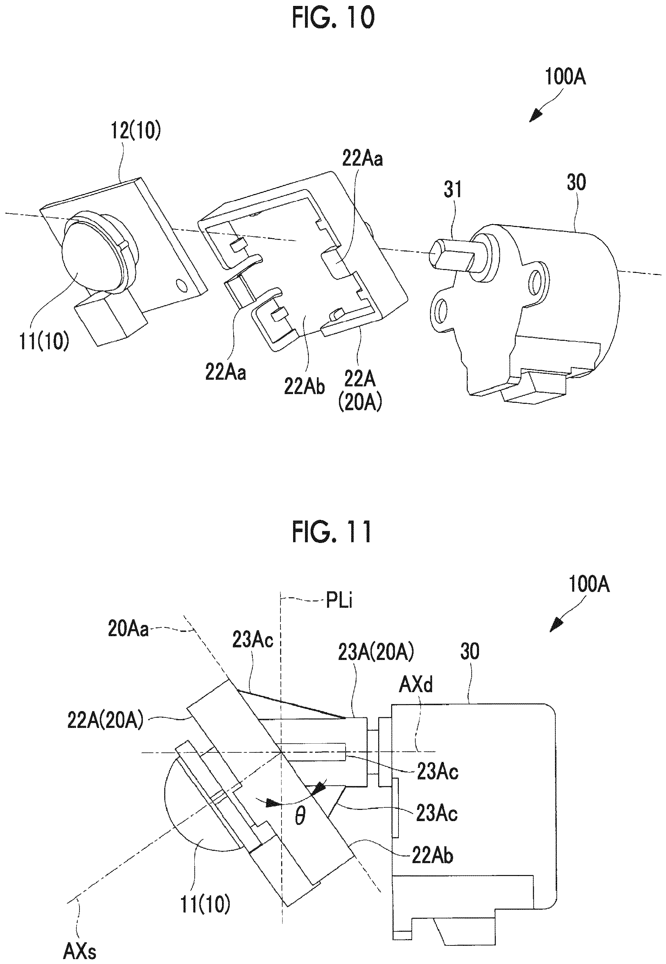

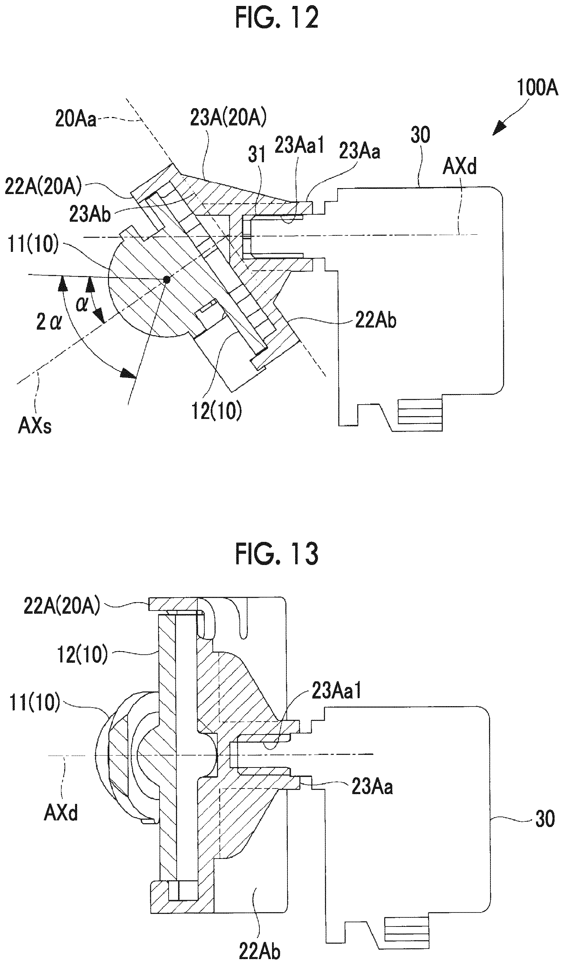

The sensor drive device 100A of the present embodiment will be described with reference to the drawings. Fig. 9 is a perspective view of the sensor drive device 100A according to the present embodiment. Fig. 10 is an exploded perspective view of the sensor drive device 100A shown in Fig. 9. Fig. 11 is a right side view of the sensor drive device 100A shown in Fig. 9. Fig. 12 is a vertical sectional view of the sensor drive device 100 shown in Fig. 9.

The sensor drive device 100A of the present embodiment is a device in which the detection range capable of being detected by the sensor 11 itself is expanded with a simple mechanism by rotating the sensor substrate 10 provided with the sensor (detection unit) 11 around the drive axis AXd.

As shown in Figs. 9 to 12, the sensor drive device 100A includes the sensor substrate 10, a holding unit 20A for holding the sensor substrate 10, the drive unit 30 for rotating the holding unit 20A around the axis AXd, and the base (not shown) to which the holding unit 20A and the drive unit 30 are mounted. In the sensor drive device 100A, the drive unit 30 is mounted to the base, and the sensor substrate 10 is held by the holding unit 20A to be integrated as one unit.

The sensor drive device 100A is mounted to the inside of the main body case 2 on the back surface side of the sensor cover 5 through the base 40, and detects the infrared rays that are emitted from the indoor space S1 through the sensor cover 5.

As shown in Fig. 13, the sensor 11 is a sensor whose detection range is the range of the directivity angle 2α that is inclined at the angle α with respect to the sensor axis AXs orthogonal to the plane on which the substrate main body 12 is disposed.

The holding unit 20A has the holding member 22A for holding the sensor substrate 10 and the support member 23A for supporting the holding member 22A, and the holding member 22A is a member formed integrally with the support member 23A by a resin material or the like.

As shown in Fig. 10, the holding member 22A is a frame-shaped member in which four members each extending in a plate shape are integrally formed so as to have a rectangular shape when viewed in a plan view. The holding member 22A has a pair of locking portions 22Aa for locking and holding the sensor substrate 10, and a planar bottom portion 22Ab to which the substrate main body 12 of the sensor substrate 10 is mounted. The bottom portion 22Ab rotates around the drive axis AXd while being supported by a tip portion 23Ab of the support member 23A (described later). Since the tip portion 23Ab of the support member 23A forms an inclined plane 20Aa, the holding member 22A rotates the sensor substrate 10 around the drive axis AXd while holding the sensor substrate 10 along the inclined plane 20Aa.

The support member 23A is a member having a base end portion 23Aa that is mounted to the driving shaft 31 of the drive unit 30, and the tip portion 23Ab that forms the inclined plane 20Aa (refer to Figs. 11 and 12). As shown in Fig. 13, the base end portion 23Aa has an insertion hole 23Aa1 for inserting the driving shaft 31. The support member 23A with the driving shaft 31 inserted into the insertion hole 23Aa1 rotates integrally with the driving shaft 31 around the drive axis AXd.

As shown in Fig. 11, the support member 23A has a plurality of ribs 23Ac extending in a radial direction with respect to the drive axis AXd. The tip portion 23Ab is formed such that the tip sides of the ribs 23Ac are disposed on the same plane, and the inclined plane 20Aa is formed on the tip side of the support member 23A. Although the inclined plane 20Aa is a virtual plane, it is formed in a shape in which the planar bottom portion 22Ab of the holding member 22A is supported by the tip portion 23Ab, and the bottom portion 22Ab is disposed along the inclined plane 20Aa. The support member 23A rotates integrally with the holding member 22A around the drive axis AXd.

As shown in Fig. 11, the inclined plane 20Aa is inclined by a predetermined angle θ with respect to the plane PLi orthogonal to the drive axis AXd along which the driving shaft 31 is disposed. The predetermined angle θ is appropriately set in a range larger than 0 degrees and smaller than 90 degrees in consideration of the directivity angle 2α of the sensor 11 and a range to be detected by the sensor 11.

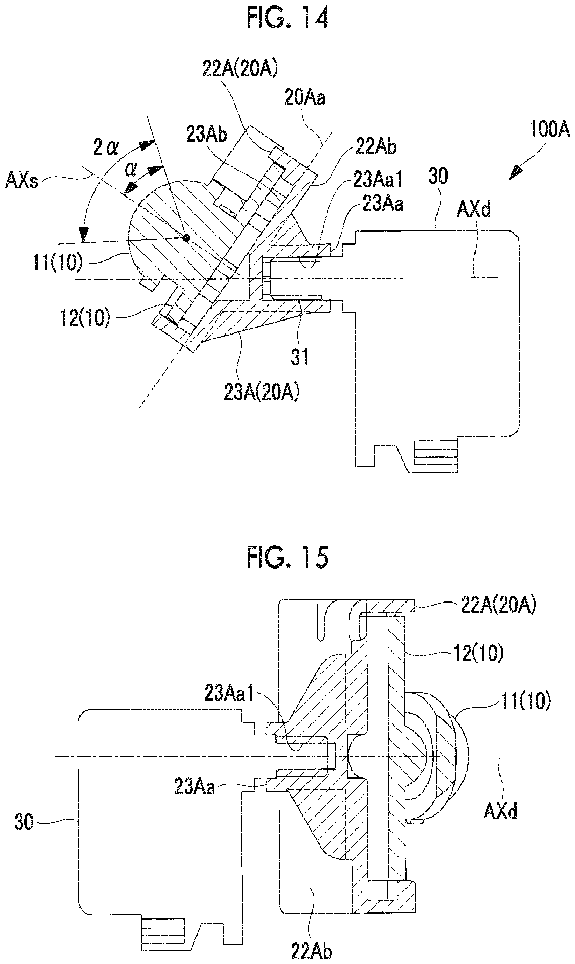

Next, an operation in which the sensor drive device 100A of the present embodiment rotates the sensor substrate 10 around the axis AXd will be described with reference to the drawings. Fig. 13 is a vertical sectional view of the sensor drive device 100A in which the sensor substrate 10 is rotated 90 degrees in the clockwise direction. Fig. 14 is a vertical sectional view of the sensor drive device 100A in which the sensor substrate 10 is rotated 180 degrees in the clockwise direction. Fig. 15 is a vertical sectional view of the sensor drive device 100A in which the sensor substrate 10 is rotated 270 degrees in the clockwise direction.

Fig. 12 described above is a vertical sectional view of the sensor drive device 100A shown in Fig. 9. The state shown in Figs. 9 and 11 is assumed to be a state where the rotation angle of the sensor substrate 10 around the driving shaft AXd is 0 degrees. As shown in Fig. 12, in the sensor drive device 100A, in a case where the rotation angle of the sensor substrate 10 around the drive axis AXd is 0 degrees, the sensor axis AXs extends toward the lower side in the up-down direction and the center in the right-left direction of the indoor space S1.

As shown in Fig. 12, the holding unit 20A forms the inclined plane 20Aa in which the normal direction is directed to the lower end of the detection range in the up-down direction and the center of the detection range in the right-left direction of the indoor space S1 due to the support member 23A, and supports the bottom portion 22Ab of the holding member 22A along the inclined plane 20Aa. Therefore, a state is created where the normal direction to the inclined plane 20Aa and the sensor axis AXs coincide with each other and the sensor axis AXs extends toward the lower side in the up-down direction and the center in the right-left direction of the indoor space S1.

Fig. 13 shows the sensor drive device 100A in a state where the sensor substrate 10 is rotated 90 degrees in the clockwise direction. As shown in Fig. 13, in the sensor drive device 100A, in a case where the rotation angle of the sensor substrate 10 around the drive axis AXd is 90 degrees, the sensor axis AXs extends toward the center in the up-down direction and the right side (the direction in a case where the indoor space S1 is viewed from the indoor unit 1) in the right-left direction of the indoor space S1.

In the state shown in Fig. 13, the holding unit 20A forms the inclined plane 20Aa in which the normal direction is directed to the center of the detection range in the up-down direction and the right end of the detection range in the right-left direction of the indoor space S1 due to the support member 23A, and supports the bottom portion 22Ab of the holding member 22A along the inclined plane 20Aa. Therefore, a state is created where the normal direction to the inclined plane 20Aa and the sensor axis AXs coincide with each other and the sensor axis AXs extends toward the center in the up-down direction and the right end in the right-left direction of the indoor space S1.

Fig. 14 shows the sensor drive device 100A in a state where the sensor substrate 10 is rotated 180 degrees in the clockwise direction. As shown in Fig. 14, in the sensor drive device 100A, in a case where the rotation angle of the sensor substrate 10 around the drive axis AXd is 180 degrees, the sensor axis AXs extends toward the upper side in the up-down direction and the center in the right-left direction of the indoor space S1.

As shown in Fig. 14, the holding unit 20A forms the inclined plane 20Aa in which the normal direction is directed to the upper end of the detection range in the up-down direction and the center of the detection range in the right-left direction of the indoor space S1 due to the support member 23A, and supports the bottom portion 22Ab of the holding member 22A along the inclined plane 20Aa. Therefore, a state is created where the normal direction to the inclined plane 20Aa and the sensor axis AXs coincide with each other and the sensor axis AXs extends toward the upper side in the up-down direction and the center in the right-left direction of the indoor space S1.

Fig. 15 shows the sensor drive device 100A in a state where the sensor substrate 10 is rotated 270 degrees in the clockwise direction. As shown in Fig. 15, in the sensor drive device 100A, in a case where the rotation angle of the sensor substrate 10 around the drive axis AXd is 270 degrees, the sensor axis AXs extends toward the center in the up-down direction and the left side (the direction in a case where the indoor space S1 is viewed from the indoor unit 1) in the right-left direction of the indoor space S1.

In the state shown in Fig. 15, the holding unit 20A forms the inclined plane 20Aa in which the normal direction is directed to the center of the detection range in the up-down direction and the left end of the detection range in the right-left direction of the indoor space S1 due to the support member 23A, and supports the bottom portion 22Ab of the holding member 22A along the inclined plane 20Aa. Therefore, a state is created where the normal direction to the inclined plane 20Aa and the sensor axis AXs coincide with each other and the sensor axis AXs extends toward the center in the up-down direction and the left end in the right-left direction of the indoor space S1. When the sensor substrate 10 is further rotated 90 degrees in the clockwise direction around the drive axis AXd from the state shown in Fig. 15, it returns to the state shown in Fig. 12.

As described above, in the sensor drive device 100A, the driving shaft 31 is rotated once around the drive axis AXd by the drive unit 30, whereby the support member 23A rotates once around the drive axis AXd. The tip portion 23Ab of the support member 23A forms the inclined plane 20Aa and the support member 23A is formed integrally with the holding member 22A.

Therefore, the sensor substrate 10 held by the holding member 22A rotates around the drive axis AXd while maintaining the inclination angle along the inclined plane 20Aa. Therefore, the holding unit 20A rotates the sensor substrate 10 once around the drive axis AXd while holding the sensor substrate 10 along the inclined plane 20Aa, by rotating the support member 23A once around the drive axis AXd.

According to the sensor drive device 100A of the present embodiment described above, it is possible to detect information that is obtained from a wide detection range, by using a relatively simple component in which the holding member 22A for holding the sensor substrate 10 and the support member 23A that is mounted to the driving shaft 31 are integrally formed.

### [Other Embodiments]

In the above description, it was assumed that the sensor 11 that is provided on the sensor substrate 10 is a human sensor. However, other aspects may be adopted. For example, it may be a temperature sensor that detects a temperature in a predetermined detection range. Further, for example, it may be an illuminance sensor that detects an illuminance in a predetermined detection range. Further, for example, it may be a receiving unit that receives information that is transmitted from a predetermined detection range. Further, for example, it may be an image sensor that acquires an image in a predetermined detection range. Further, for example, it may be a sensor that detects leakage of a refrigerant (for example, a refrigerant that is used in the heat exchanger of the indoor unit 1) in a predetermined detection range.

In this manner, as the sensor 11, it is not limited to the human sensor, and other sensors may be used as long as they detect information that is obtained from a predetermined detection range. Further, in the above description, it was assumed that the indoor unit 1 of the air conditioner is provided with the sensor drive device 100 provided with the sensor substrate 10. However, another device different from the indoor unit 1 of the air conditioner may be provided with the sensor substrate 10.

Further, in the above description, it was assumed that the substrate that is held by each of the holding unit 20 and the holding unit 20A is the sensor substrate 10 provided with the sensor 11. However, other aspects may be adopted. For example, the substrate that is held by each of the holding unit 20 and the holding unit 20A may be a communication substrate provided with a transmission unit (not shown) that transmits information to a predetermined communication range (transmission range) and a receiving portion (not shown) that receives information from a predetermined communication range (reception range).

Further, in the above description, it was assumed that a single sensor 11 is provided on the sensor substrate 10. However, other aspects may be adopted. For example, a plurality of sensors 11 may be provided on the sensor substrate 10. In this case, the plurality of sensors 11 that are provided on the sensor substrate 10 may be the same type, or different types of sensors may be combined and disposed. The plurality of sensors 11 are provided on a single sensor substrate 10, whereby the relative positional relationship of each sensor 11 is fixed, and therefore, the detection accuracy in a case where the detection results of the plurality of sensors 11 are associated with each other is improved.

Further, in the above description, it was assumed that the indoor unit 1 of the air conditioner is a wall-mounted type indoor unit that is installed on the wall surface of the indoor space. However, other aspects may be adopted. For example, it may be a ceiling-embedded type indoor unit.

### Reference Signs List

- 10:: sensor substrate (base portion)
- 11:: sensor (detection unit)
- 20, 20A:: holding unit
- 20a, 20Aa:: inclined plane
- 21:: first frame body
- 22:: second frame body
- 22A:: holding member
- 22b, 22Ab:: bottom portion
- 23:: rotating member
- 23A:: support member
- 30:: drive unit
- 31:: driving shaft
- 40:: base
- 100, 100A:: sensor drive device
- AX1:: first swing axis
- AX2:: second swing axis
- AXd:: drive axis
- AXs:: sensor axis
- PLi:: plane
- S1:: indoor space

## Claims

1. A drive device (100) comprising:
a base portion (10) provided with a detection unit (11) that detects information that is obtained from a predetermined detection range or a transmission unit that transmits information to a predetermined transmission range;
a holding unit (20) that is mounted to a driving shaft (31) that is rotated by a drive unit (30), and holds the base portion (10), and
a base (40) to which the holding unit is mounted, **characterized in that** the holding unit (20) forms an inclined plane (20a, 20Aa) inclined by a predetermined angle (θ) in a range larger than 0° and smaller than 90° with respect to a plane (PLi) orthogonal to an axis (AXd) along which the driving shaft (31) is disposed, and rotates the base portion (10) around the axis (AXd) while holding the base portion along the inclined plane (20a, 20Aa), and
the holding unit includes
a first frame body (21) that is mounted to the base (40) so as to be swingable around a first swing axis (AX1),
a second frame body (22) that is mounted to the first frame body (21) so as to be swingable around a second swing axis (AX2) orthogonal to the first swing axis (AX1) and has a planar bottom portion (22b, 22Ab) to which the base portion (10) is mounted, and
a rotating member (23) of which a base end side is mounted to the driving shaft (31) and a tip side is provided with the inclined plane (20a, 20Aa), and which rotates around the axis (AXd) in a state where the inclined plane is in contact with the bottom portion.

2. The drive device (100) according to claim 1, wherein the holding unit (20) includes
a holding member (22A) that holds the base portion (10), and
a support member (23A) that is mounted to the driving shaft (31) and supports the holding member (22A) along the inclined plane (20a), and
the holding member (22A) is formed integrally with the support member (23A).

3. The drive device (100) according to claim 1 or 2, wherein a plurality of the detection units (11) are provided at the base portion (10).

4. The drive device (100) according to any one of claims 1 to 3, wherein the detection unit (11) is at least one of a human sensor that detects a moving body in the predetermined detection range, a temperature sensor that detects a temperature in the predetermined detection range, an illuminance sensor that detects an illuminance in the predetermined detection range, a receiving unit that receives information that is transmitted from the predetermined detection range, an image sensor that acquires an image in the predetermined detection range, and a sensor that detects leakage of a refrigerant in the predetermined detection range.

## Patentansprüche

1. Antriebsvorrichtung (100), die Folgendes umfasst:
einen Basisabschnitt (10), der mit einer Detektionseinheit (11), die Informationen detektiert, die aus einem vorbestimmten Detektionsbereich erhalten werden, oder einer Übertragungseinheit, die Informationen in einen vorbestimmten Übertragungsbereich überträgt, ausgerüstet ist;
eine Halteeinheit (20), die an einer Antriebswelle (31) montiert ist, die von einer Antriebseinheit (30) angetrieben wird, und den Basisabschnitt (10) hält, und
eine Basis (40), an der die Halteeinheit montiert ist,
**dadurch gekennzeichnet, dass** die Halteeinheit (20) mit Bezug auf eine Ebene (PLi), die rechtwinklig zu einer Achse (AXd) verläuft, entlang die die Antriebswelle (31) angeordnet ist, eine geneigte Ebene (20a, 20Aa) bildet, die um einen vorbestimmten Winkel (θ) in einem Bereich von größer als 0° und kleiner als 90° geneigt ist, und den Basisabschnitt (10) um die Achse (AXd) dreht, während sie den Basisabschnitt entlang der geneigten Ebene (20a, 20Aa) hält, und
die Halteeinheit beinhaltet Folgendes
einen ersten Rahmenkörper (21), der an der Basis (40) montiert ist, um um eine erste Schwingachse (AX1) schwingbar zu sein,
einen zweiten Rahmenkörper (22), der am ersten Rahmenkörper (21) montiert ist, um um eine zweite Schwingachse (AX2) schwingbar zu sein, die rechtwinklig zur ersten Schwingachse (AX1) verläuft, und einen planaren Bodenabschnitt (22b, 22Ab) aufweist, an dem der Basisabschnitt (10) montiert ist, und
ein Drehelement (23), von dem eine Basisendeseite an der Antriebswelle (31) montiert ist und eine Spitzenseite mit der geneigten Ebene (20a, 20Aa) ausgerüstet ist, und die sich in einem Zustand, in dem die geneigte Ebene mit dem Bodenabschnitt den Kontakt ist, um die Achse (AXd) dreht.

2. Antriebsvorrichtung (100) nach Anspruch 1, wobei die Halteeinheit (20) Folgendes beinhaltet
ein Halteelement (22A), das den Basisabschnitt (10) hält, und
ein Stützelement (23A), das an der Antriebswelle (31) montiert ist und das Halteelement (22A) entlang der geneigten Ebene (20a) stützt, und
das Halteelement (22A) ist integral mit dem Stützelement (23A) gebildet.

3. Antriebsvorrichtung (100) nach Anspruch 1 oder 2, wobei eine Vielzahl der Detektionseinheiten (11) am Basisabschnitt (10) bereitgestellt sind.

4. Antriebsvorrichtung (100) nach einem der Ansprüche 1 bis 3,
wobei die Detektionseinheit (11) mindestens eines von einem Humansensor, der im vorbestimmten Detektionsbereich einen sich bewegenden Körper detektiert, einem Temperatursensor, der im vorbestimmten Detektionsbereich eine Temperatur detektiert, einem Beleuchtungsstärkesensor, der im vorbestimmten Detektionsbereich eine Beleuchtungsstärke detektiert, einer Empfangseinheit, die Informationen empfängt, die aus dem vorbestimmten Detektionsbereich übertragen werden, einem Bildsensor, der im vorbestimmten Detektionsbereich ein Bild erfasst, und einem Sensor, der im vorbestimmten Detektionsbereich austretendes Kältemittel detektiert, ist.

## Revendications

1. Dispositif d'entraînement (100) comprenant :
une partie de base (10) prévue avec une unité de détection (11) qui détecte des informations obtenues à partir d'une plage de détection prédéterminée ou d'une unité de transmission qui transmet l'information à une plage de transmission prédéterminée ;
une unité de support (20) qui est montée sur un arbre d'entraînement (31) qui est entraîné en rotation par une unité d'entraînement (30) et supporte la partie de base (10), et
une base (40) sur laquelle l'unité de support est montée,
**caractérisé en ce que** l'unité de support (20) forme un plan incliné (20a, 20Aa) incliné selon un angle (θ) prédéterminé dans une plage supérieure à 0° et inférieure à 90° par rapport à un plan (PLi) orthogonal par rapport à un axe (AXd) le long duquel l'arbre d'entraînement (31) est disposé, et fait tourner la partie de base (10) autour de l'axe (AXd) tout en supportant la partie de base le long du plan incliné (20a, 20Aa), et
l'unité de support comprend :
un premier corps de châssis (21) qui est monté sur la base (40) de manière à pouvoir pivoter autour d'un premier axe de pivotement (AX1),
un second corps de châssis (22) qui est monté sur le premier corps de châssis (21) de manière à pouvoir pivoter autour d'un second axe de pivotement (AX2) orthogonal par rapport au premier axe de pivotement (AX1) et a une partie inférieure plane (22b, 22Ab) sur laquelle la partie de base (10) est montée, et
un élément rotatif (23) dont un côté d'extrémité de base est monté sur l'arbre d'entraînement (31) et un côté de pointe est prévu avec le plan incliné (20a, 20Aa), et qui tourne autour de l'axe (AXd) dans un état dans lequel le plan incliné est en contact avec la partie inférieure.

2. Dispositif d'entraînement (100) selon la revendication 1, dans lequel l'unité de support (20) comprend :
un élément de support (22A) qui supporte la partie de base (10), et
un élément de support (23A) qui est monté sur l'arbre d'entraînement (31) et supporte l'élément de support (22A) le long du plan incliné (20a), et
l'élément de support (22A) est formé de manière solidaire avec l'élément de support (23A).

3. Dispositif d'entraînement (100) selon la revendication 1 ou 2, dans lequel une pluralité d'unités de détection (11) est prévue au niveau de la partie de base (10).

4. Dispositif d'entraînement (100) selon l'une quelconque des revendications 1 à 3, dans lequel l'unité de détection (11) est au moins l'un parmi un capteur de présence humaine qui détecte un corps mobile dans la plage de détection prédéterminée, un capteur de température qui détecte une température dans la plage de détection prédéterminée, un capteur de luminosité qui détecte une luminosité dans la plage de détection prédéterminée, une unité de réception qui reçoit l'information qui est transmise de la plage de détection prédéterminée, un capteur d'image qui acquiert une image dans la plage de détection prédéterminée, et un capteur qui détecte une fuite d'un réfrigérant dans la plage de détection prédéterminée.
